# EUROPEAN PATENT SPECIFICATION

(11) **EP 1 709 866 B1**
(45) Date of publication and mention of the grant of the patent: **13.05.2009**
(21) Application number: 06075566.7
(22) Date of filing: 09.03.2006
(51) Int. Cl.: A01K 1/00

(54) **An assembly for keeping animals and a selection device for allowing animals to pass from a first area to a second area**
Einrichtung zur Tierzucht und Vorrichtung zum Durchlassen eines Tieres vom einem ersten Bereich zu einem zweiten Bereich
Assemblage pour élever des animaux et dispositif de sélection pour permettre des animaux de passer d'une premiere région à une seconde

(30) Priority: 06.04.2005 NL 1028704
(43) Date of publication of application: 11.10.2006
(73) Proprietor: Lely Enterprises AG, 6300 ZUG (CH)
(72) Inventor: van den Berg, Karel, 2971 BR Bleskensgraaf (NL)
(74) Representative: Corten, Maurice Jean F.M.

(56) References cited:
- EP-A- 0 898 880
- CA-A1- 2 148 680
- NL-C- 1 013 208
- US-A- 4 136 641
- US-A- 4 261 297
- US-A- 4 328 643
- US-A- 4 617 876
- US-A- 5 230 299
- "Van Dale Groot Woordenboek van de Nederlandse Taal" VAN DALE , NL/BE 14 * page 2991 *

## Description

The invention relates to an assembly for keeping animals, such as cows, according to the preamble of claim 1.

Such an assembly is known from EP-A-0898880. In this known assembly the entrance openings are closed by pivoting gates. The known assembly is used, for example, for keeping animals that have been milked and have not been milked, for example cows, belonging to the same group, separate from each other.

It is remarked that NL-C-1013208 discloses a selection device for animals comprising a selection door which is opened or closed depending on the animal. Different types of selection doors are proposed including a revolving door, a swinging door, a sliding door and a sliding door on wheels.

Further, US-A-4,136,641 discloses a livestock sorting gate comprising a pivotable selection gate for guiding animals to different areas.

The invention aims at providing an alternative assembly.

For this purpose, according to the invention, an assembly for keeping animals, such as cows, of the type mentioned in the preamble comprises the features of the characterizing part of claim 1. Owing to the fact that there is used a closing device which is slidable by means of a drive element for reducing the size of the entrance opening and for closing an entrance opening, it is possible to design the selection device more compactly and more multifunctionally than in the case of the known pivoting gates.

The closing device is provided with a closing element which is capable of being rolled up, such as a cloth of fabric or plastic, with two elongated carrier portions, an end of the closing device which is capable of being rolled up being fastened to each carrier portion, the drive element being suitable for displacing the carrier portions relative to each other for increasing or decreasing the distance between the carrier portions, and with a rolling up mechanism for automatically rolling up or unrolling the closing element. Such a rolling up mechanism is known per se, for example with sun blinds and roller blinds.

The slidable closing device preferably comprises a guide element, and the assembly is preferably provided with a guiding device for guiding the guide element in a sliding manner. In this manner the closing device can be driven in an accurate and reliable manner for closing the entrance opening.

Depending on the direction in which the closing device slides across the entrance opening, the guide element is fitted to an upper side and/or to a lower side of the closing device, or to an upright side of the closing device, preferably on two opposite sides of guide elements.

For the purpose of obtaining a compact selection device, the guiding device is partially included in a partition gate.

Although it is possible to use a sliding closing device for closing more than one entrance opening, for controlling animal traffic, the assembly preferably comprises per entrance opening a respective closing device.

If the assembly comprises an animal identification device for identifying an animal and for supplying an identification signal, the drive element being controlled with the aid of the identification signal, an entrance opening can be closed or released depending on the individual animal.

If the entrance openings of the selection device are disposed around a central axis, it is advantageous if each carrier portion is fastened to an arm which extends radially outwards from the central axis, the drive element being suitable for causing the arm to pivot about the central axis for causing the closing element which is capable of being rolled up to slide across the entrance opening. The selection device is preferably provided with a frame which is disposed on the ground, the closing element which is capable of being rolled up surrounding the frame at least partially.

The invention also relates to a selection device for allowing animals to pass from a first area to a second area, which selection device is suitable for use in an assembly as claimed in any one of the preceding claims, the selection device having a number of entrance openings, the number of entrance openings corresponding with the number of exit openings, and an exit opening being in connection with a respective entrance opening, **characterized in that** the selection device is provided with at least one closing device which is slidable by means of a drive element for closing an entrance opening, and in that the closing device is provided with a closing element which is capable of being rolled up, such as a cloth of fabric or plastic, with two elongated carrier portions, an end of the closing device which is capable of being rolled up being fastened to each carrier portion, the drive element being suitable for displacing the carrier portions relative to each other for increasing or decreasing the distance between the carrier portions, and with a rolling up mechanism for automatically rolling up or unrolling the closing element.

The features of the preferred embodiments described in the subclaims of the assembly according to the invention also apply, as far as possible, to the selection device according to the invention.

Hereinafter the invention will be explained in further detail on the basis of non-restricting exemplary embodiments with reference to the accompanying drawings, in which:
Figure 1 is a perspective view of an embodiment of a selection device according to the invention;
Figure 2 is a front view of an alternative embodiment of a selection device not in accordance with the invention;
Figure 3 is a perspective view of a further alternative embodiment of a selection device not in accordance with the invention, in which a part of the guiding device is disposed in a partition element;
Figure 4 is a schematic plan view of an assembly according to the invention with a selection device comprising a frame, and
Figure 5 is a schematic plan view of an alternative assembly.

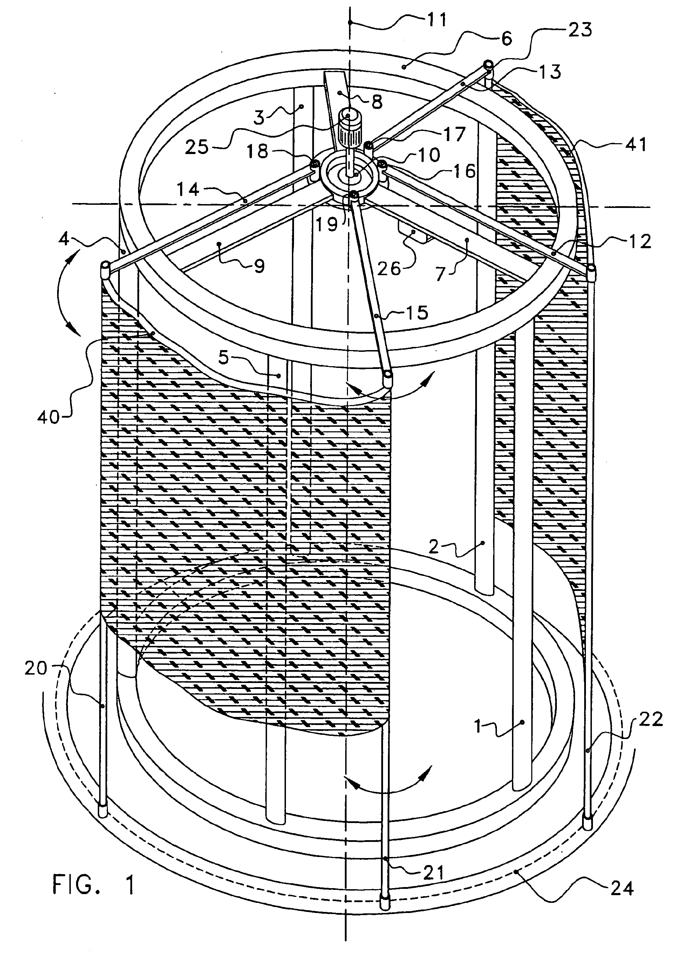

The selection device shown in Figure 1 is intended for allowing a group of animals to pass from a first area to a second area. The selection device is provided with a frame disposed on the ground, constituted by upright bars 1, 2, 3, 4, 5 disposed on the ground and connected at the upper side by a connecting bar 6, which is circular in the embodiment shown. It will be obvious that, in an alternative embodiment, the connecting bar can also form a polygon. The circular connecting bar 6 is connected, via radial connecting elements 7, 8, 9, with a central boss 10 which is located around an imaginary central axis 11.

An entrance opening of the selection device is located between two neighbouring upright bars 1, 2, 3, 4, 5. The entrance openings of the selection device are thus disposed around the central axis 11.

Carrier arms 12, 13, 14, 15 extend radially from the boss 10. The carrier arms 12, 13, 14, 15 are connected with the central boss 10 via pivot axes 16, 17, 18, 19. Elongated carrier portions 20, 21, 22, 23, extending downwards, are fastened to the free ends of the carrier arms 12, 13, 14, 15. At the lower side the carrier portions 20, 21, 22, 23 are included in a guiding manner in a guiding groove 24. The guiding groove 24 surrounds the upright bars 1, 2, 3, 4, 5.

Between the two carrier portions 20 and 21 and the two carrier portions 22 and 23 there is disposed a cloth of fabric or plastic for forming a closing device 40, 41 which is capable of being rolled up for the entrance openings. At least one of the relevant carrier portions is provided with a rolling up mechanism known per se (not shown) for automatically rolling up or unrolling the cloth.

A drive element 25, for example an electric motor or the like, drives the carrier arms 12, 13, 14, 15 for displacing the carrier portions 20, 21, 22, 23 relative to each other for increasing or decreasing the distance between the carrier portions. In this manner the cloth 40, 41 can be unrolled and/or rolled up. The drive element 25 is also capable of adjusting the position of the carrier arms relative to the entrance openings. In this manner, by displacing the carrier arms, it is possible to slide the cloth 40, 41 which is capable of being rolled up across the entrance openings, the cloth 40, 41 which is capable of being rolled up surrounding the frame at least partially. The closing device which is slidable across the entrance openings thus effects the gradual decrease of the size of the entrance opening and the closing of an entrance opening.

In the embodiment shown, an animal identification device 26 known per se is disposed on the frame and is suitable for identifying an animal that approaches an entrance opening. The animal identification device 26 supplies an identification signal to the drive element 25, as a result of which the latter is controlled with the aid of the identification signal. It will be obvious that the selection device can also be operated independently of the animal identity.

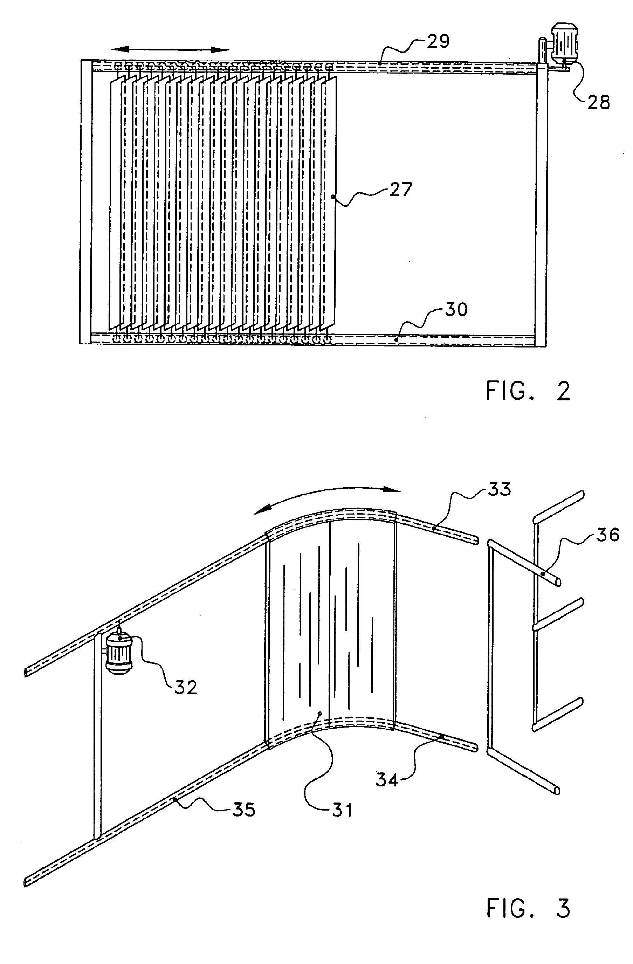

Figure 2 shows a part of an alternative selection device not being part of the invention, the slidable closing device comprising lamellas 27 which can be slid across the entrance opening by means of a drive element 28 via an upper guiding device 29 and a lower guiding device 30.

In Figure 3 the closing device comprises a sliding door 31 not being part of the invention. Figure 3 shows two of the partition elements, in the embodiment shown partition gates 35, 36, which separate the areas where the animals are allowed to walk about freely from each other. Via a drive motor 32 and guiding devices 33 and 34, the sliding door 31 is slidable across an entrance opening, the guiding devices being included partially in the partition gates in this embodiment.

It will be obvious that, in alternative embodiments, the slidable closing device is slidable across the entrance opening from top to bottom. In this case, the guiding devices are located on the sides of the closing device.

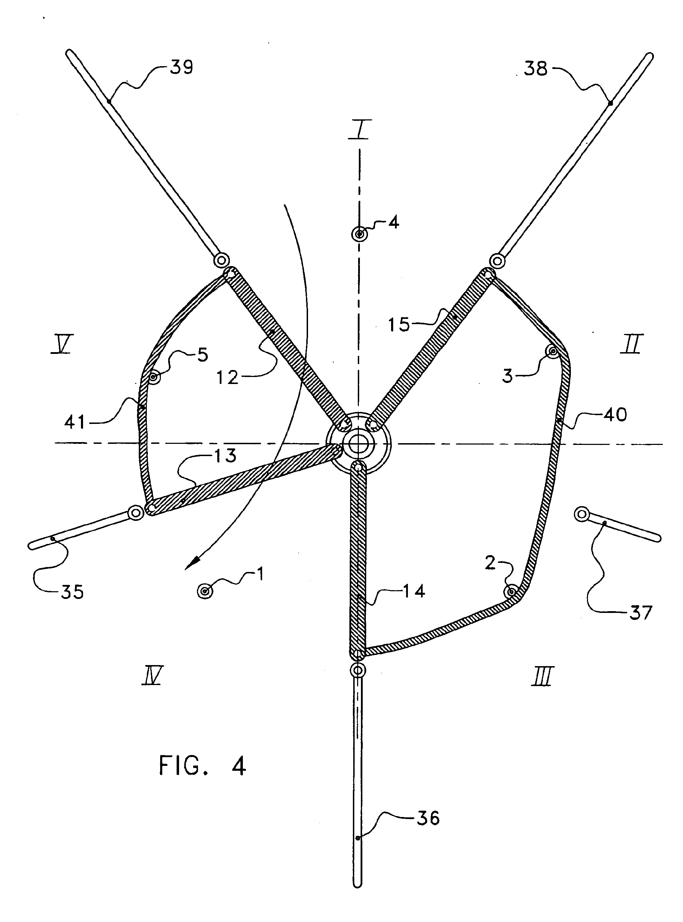

Figure 4 is a schematic plan view of an embodiment of an assembly for keeping animals, such as cows. The assembly is provided with a number of areas I, II, III, IV, V, in which animals are allowed to move freely. The areas I, II, III, IV, V are separated from each other by partition elements 35, 36, 37, 38, 39, such as gates. Each area I, II, III, IV, V has a respective exit opening which, in the embodiment shown, coincides at least substantially with the entrance opening of the selection device. An exit opening of an area is thus in direct connection with a respective entrance opening. In an alternative embodiment, the connection can be effected via an additional path. The selection device shown in Figure 4 is analogous to that as shown in Figure 1.

In the situation shown in Figure 4, the carrier arms 12, 13, 14, 15 are positioned in such a way that there is formed a free passage from area I to area IV. As shown, the closing devices 40, 41 surround the relevant upright bars. The selection device is also suitable for confining a particular animal. For this purpose, when the animal identification device detects an animal to be confined, the carrier arms are displaced by the drive element in such a way that, when the animal is located in the inside of the selection device, all entrance openings are closed. The selection device is then capable of supplying via the assembly, with the aid of a transmitter or the like, a signal to the manager that the relevant animal has been confined. Analogously, with the aid of the animal identification device, it is possible to provide selective passage through the selection device.

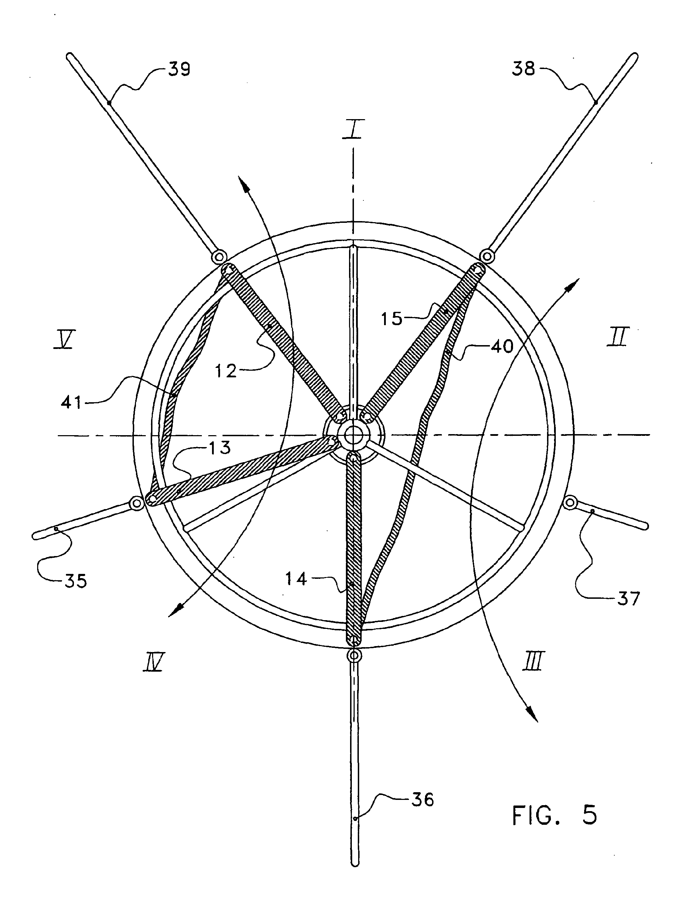

In the embodiment shown in Figure 5, the cloths do not surround the frame (or a frame with upright bars is not present). In this case, the cloths are pulled tight. As shown, in this manner a connection between areas I and IV and areas II en III can be obtained simultaneously.

It will be obvious that the invention is not limited to the embodiments shown. The selection device may be provided, for example, with a clamp protection known per se for the slidable closing devices. Furthermore, it is possible to include particular deterring elements, such as for example electrified wire, in the closing device, in order that animals will not kick against a closed closing device to still get access to the selection device.

## Claims

1. An assembly for keeping animals, such as cows, which assembly is provided with a number of areas (I, II, III, IV, V) where animals are allowed to move freely and with a selection device for allowing animals to pass from a first area to a second area, the areas being separated from each other by partition elements, such as gates, each area having a respective exit opening, the selection device having a number of entrance openings, the number of entrance openings corresponding with the number of exit openings, and an exit opening being in connection with a respective entrance opening, the assembly being provided with at least one closing device (40, 41) which is slidable by means of a drive element (25) for reducing the size of the entrance opening and for closing an entrance opening, **characterized in that** the closing device is provided with a closing element which is capable of being rolled up, such as a cloth (40, 41) of fabric or plastic, with two elongated carrier portions (20, 21; 22, 23), an end of the closing device which is capable of being rolled up being fastened to each carrier portion (20, 21; 22, 23), the drive element being suitable for displacing the carrier portions (20, 21; 22, 23) relative to each other for increasing or decreasing the distance between the carrier portions, and with a rolling up mechanism for automatically rolling up or unrolling the closing element (40, 41).

2. An assembly as claimed in claim 1, **characterized in that** the slidable closing device comprises a guide element, and **in that** the assembly is provided with a guiding device (24) for guiding the guide element in a sliding manner.

3. An assembly as claimed in claim 2, **characterized in that** the guide element is fitted to an upper side of the closing device (40, 41).

4. An assembly as claimed in claim 2 or 3, **characterized in that** the guide element is fitted to a lower side of the closing device (40, 41).

5. An assembly as claimed in claim 2, 3 or 4, **characterized in that** the guide element is fitted to an upright side of the closing device (40, 41).

6. An assembly as claimed in claim 2, 3, 4 or 5, **characterized in that** the closing device (40, 41) is provided with guide elements on two opposite sides.

7. An assembly as claimed in any one of claims 2 to 6, **characterized in that** the guiding device (24) is partially included in a partition element.

8. An assembly as claimed in any one of the preceding claims, **characterized in that** the assembly comprises per entrance opening a respective closing device (40, 41).

9. An assembly as claimed in any one of the preceding claims, **characterized in that** the assembly comprises an animal identification device (26) for identifying an animal and for supplying an identification signal, the drive element (25) being controlled with the aid of the identification signal.

10. An assembly as claimed in any one of claims 1 to 9, **characterized in that** the entrance openings of the selection device are disposed around a central axis (11), **in that** each carrier portion is fastened to an arm (12, 13; 14, 15) which extends radially outwards from the central axis (11), and **in that** the drive element (25) is suitable for causing the arm to pivot about the central axis (11) for causing the closing element (40, 41) which is capable of being rolled up to slide across the entrance opening.

11. An assembly as claimed in any one of claims 1 to 10, **characterized in that** the selection device is provided with a frame (1, 2, 3, 4, 5) which is disposed on the ground, the closing element which is capable of being rolled up surrounding the frame at least partially.

12. A selection device for allowing animals to pass from a first area to a second area, which selection device is suitable for use in an assembly as claimed in any one of the preceding claims, the selection device having a number of entrance openings, the number of entrance openings corresponding with the number of exit openings, and an exit opening being in connection with a respective entrance opening, **characterized in that** the selection device is provided with at least one closing device (40, 41) which is slidable by means of a drive element (25, 28, 32) for closing an entrance opening, and **in that** the closing device is provided with a closing element which is capable of being rolled up, such as a cloth (40, 41) of fabric or plastic, with two elongated carrier portions (20, 21; 22, 23), an end of the closing device which is capable of being rolled up being fastened to each carrier portion (20, 21; 22, 23), the drive element (25) being suitable for displacing the carrier portions (20, 21; 22, 23) relative to each other for increasing or decreasing the distance between the carrier portions, and with a rolling up mechanism for automatically rolling up or unrolling the closing element (40, 41).

## Patentansprüche

1. Vorrichtung zum Halten von Tieren wie Kühe, wobei die Vorrichtung mit einer Anzahl von Bereichen (I, II, III, IV, V), wo die Tiere sich frei bewegen können, und mit einer Auswahlvorrichtung vorgesehen ist, um den Tieren das Bewegen von einem ersten Bereich in einen zweiten Bereich zu gestatten, wobei die Bereiche von einander durch Abteilelemente wie Tore getrennt sind, wobei jeder Bereich eine jeweilige Ausgangsöffnung aufweist, wobei die Auswahlvorrichtung eine Anzahl von Eingangsöffnungen besitzt, wobei die Anzahl der Eingangsöffnungen mit der Anzahl der Ausgangsöffnungen übereinstimmt und eine Ausgangsöffnung in Verbindung mit einer jeweiligen Eingangsöffnung steht, wobei der Aufbau mit wenigstens einer Schließvorrichtung (40, 41) ausgestattet ist, welche mittels eines Antriebselements (25) verschiebbar ist, um die Größe der Eingangsöffnung zu verringern und um eine Eingangsöffnung zu schließen,
**dadurch gekennzeichnet, dass** die Schließvorrichtung mit einem Schließelement versehen ist, welches in der Lage ist, aufgerollt zu werden wie ein Gewebestoff oder eine Kunststoffbahn (40, 41), und mit zwei länglichen Trägerelementen (20, 21; 22, 23), wobei ein Ende der Schließvorrichtung, welche aufgerollt werden kann, an jedem Trägerelement (20, 21; 22, 23) befestigt ist, wobei das Antriebselement geeignet ist, die Trägerelemente (20, 21; 22, 23) relativ zu einander zu versetzen, um den Abstand zwischen den Trägerelementen zu vergrößern oder zu verkleinern, und mit einem Aufrollmechanismus zum automatischen Aufrollen oder Entrollen des Schließelements (40, 41) vorgesehen ist.

2. Vorrichtung nach Anspruch 1,
**dadurch gekennzeichnet, dass** das verschiebbare Schließelement ein Führungselement umfasst, und dass die Vorrichtung mit einer Führungsvorrichtung (24) zum Führen des Führungselements in einer gleitenden Weise ausgestattet ist.

3. Vorrichtung nach Anspruch 2,
**dadurch gekennzeichnet, dass** das Führungselement an einer oberen Seite der Schließvorrichtung (40, 41) angebracht ist.

4. Vorrichtung gemäß Anspruch 2 oder 3,
**dadurch gekennzeichnet, dass** das Führungselement an einer unteren Seite der Schließvorrichtung (40, 41) angebracht ist.

5. Vorrichtung nach Anspruch 2, 3 oder 4,
**dadurch gekennzeichnet, dass** das Führungselement an einer aufrechten Seite der Schließvorrichtung (40, 41) angebracht ist.

6. Vorrichtung nach Anspruch 2, 3, 4 oder 5,
**dadurch gekennzeichnet, dass** die Schließvorrichtung (40, 41) mit Führungselementen an zwei gegenüber liegenden Seiten ausgestattet ist.

7. Vorrichtung nach einem der Ansprüche 2 bis 6,
**dadurch gekennzeichnet, dass** die Führungsvorrichtung (24) teilweise in einem Abteilelement enthalten ist.

8. Vorrichtung nach einem der vorhergehenden Ansprüche,
**dadurch gekennzeichnet, dass** der Aufbau pro Eingangsöffnung eine jeweilige Schließvorrichtung (40, 41) umfasst.

9. Vorrichtung nach einem der vorhergehenden Ansprüche,
**dadurch gekennzeichnet, dass** der Aufbau eine Tieridentifikationsvorrichtung (26) zum Identifizieren eines Tieres und zum Liefern eines Identifikationssignals umfasst, wobei das Antriebselement (25) mit Hilfe des Identifikationssignals gesteuert ist.

10. Vorrichtung nach einem der Ansprüche 1 bis 9,
**dadurch gekennzeichnet, dass** die Eingangsöffnungen der Auswahlvorrichtung um eine zentrale Achse (11) angeordnet sind, so dass jeder Trägerabschnitt an einem Arm (12, 13; 14, 15) befestigt ist, welcher sich radial nach außen von der zentralen Achse (11) weg erstreckt, und dass das Antriebselement (25) geeignet ist, den Arm zu veranlassen, sich um die zentrale Achse (11) zu drehen, um das Schließelement (40, 41), welches aufgerollt werden kann, zu veranlassen, sich quer zur Eingangsöffnung zu verschieben.

11. Vorrichtung nach einem der Ansprüche 1 bis 10,
**dadurch gekennzeichnet, dass** die Auswahlvorrichtung mit einem Rahmen (1, 2, 3, 4, 5) ausgestattet ist, welcher auf dem Boden angeordnet ist, wobei das Schließelement, welches aufgerollt werden kann, den Rahmen wenigstens teilweise umgibt.

12. Auswahlvorrichtung, um Tieren zu gestatten, von einem ersten Bereich in einen zweiten Bereich zu wechseln, wobei die Auswahlvorrichtung geeignet ist, in einer Vorrichtung nach einem der vorhergehenden Ansprüche eingesetzt zu werden, wobei die Auswahlvorrichtung eine Anzahl von Eingangsöffnungen aufweist, wobei die Anzahl der Eingangsöffnungen mit der Anzahl der Ausgangsöffnungen übereinstimmt und eine Ausgangsöffnung in Verbindung mit einer jeweiligen Eingangsöffnung steht,
**dadurch gekennzeichnet, dass** die Auswahlvorrichtung mit wenigstens einer Schließvorrichtung (40, 41) ausgestattet ist, welche mittels eines Antriebselements (25, 28, 32) verschiebbar ist, um eine Eingangsöffnung zu verschließen, und dass die Schließvorrichtung mit einem Schließelement versehen ist, welches in der Lage ist, aufgerollt zu werden, wie ein Gewebestoff oder eine Kunststoffbahn (40, 41), und mit zwei länglichen Trägerelementen (20, 21; 22, 23), wobei ein Ende der Schließvorrichtung, welche aufgerollt werden kann, an jedem Trägerelement (20, 21; 22, 23) befestigt ist, wobei das Antriebselement (25) geeignet ist, die Trägerelemente (20, 21; 22, 23) relativ zu einander zu versetzen, um den Abstand zwischen den Trägerelementen zu vergrößern oder zu verkleinern, und mit einem Aufrollmechanismus zum automatischen Aufrollen oder Entrollen des Schließelements (40, 41) versehen ist.

## Revendications

1. Ensemble de garde d'animaux, tels que des vaches, ledit ensemble étant muni d'un certain nombre de zones (I, II, III, IV, V) dans lesquelles les animaux peuvent se déplacer librement, et d'un dispositif de sélection pour permettre à des animaux de passer d'une première zone à une seconde zone, les zones étant séparées les unes des autres par des éléments de séparation, tels que des barrières, chaque zone ayant une ouverture de sortie respective, le dispositif de sélection ayant un certain nombre d'ouvertures d'entrée, le nombre d'ouvertures d'entrée correspondant au nombre d'ouvertures de sortie, et une ouverture de sortie étant associée à une ouverture d'entrée respective, l'ensemble étant muni d'au moins un dispositif de fermeture (40, 41) qui peut coulisser au moyen d'un élément d'entraînement (25) afin de réduire la taille de l'ouverture d'entrée et de fermer une ouverture d'entrée, **caractérisé en ce que** le dispositif de fermeture est muni d'un élément de fermeture qui est apte à être enroulé, tel qu'une toile (40, 41) en tissu ou en plastique, avec deux parties de support allongées (20, 21 ; 22, 23), une extrémité du dispositif de fermeture qui est apte à être enroulée étant fixée à chaque partie de support (20, 21 ; 22, 23), l'élément d'entraînement étant adapté pour déplacer les parties de support (20, 21 ; 22, 23) l'une par rapport à l'autre pour accroître ou réduire la distance entre les parties de support, et avec un mécanisme d'enroulement pour enrouler ou dérouler automatiquement l'élément de fermeture (40, 41).

2. Ensemble selon la revendication 1, **caractérisé en ce que** le dispositif de fermeture coulissant comprend un élément de guidage, et **en ce que** l'ensemble est muni d'un dispositif de guidage (24) pour guider l'élément de guidage de manière coulissante.

3. Ensemble selon la revendication 2, **caractérisé en ce que** l'élément de guidage est adapté à un côté supérieur du dispositif de fermeture (40, 41).

4. Ensemble selon la revendication 2 ou 3, **caractérisé en ce que** l'élément de guidage est adapté à un côté inférieur du dispositif de fermeture (40, 41).

5. Ensemble selon la revendication 2, 3 ou 4, **caractérisé en ce que** l'élément de guidage est adapté à un côté vertical du dispositif de guidage (40, 41).

6. Ensemble selon la revendication 2, 3, 4 ou 5, **caractérisé en ce que** le dispositif de fermeture (40, 41) est muni d'éléments de guidage sur deux côtés opposés.

7. Ensemble selon l'une quelconque des revendications 2 à 6, **caractérisé en ce que** le dispositif de guidage (24) est partiellement compris dans un élément de séparation.

8. Ensemble selon l'une quelconque des revendications précédentes, **caractérisé en ce que** l'ensemble comprend par ouverture d'entrée un dispositif de fermeture respectif (40, 41).

9. Ensemble selon l'une quelconque des revendications précédentes, **caractérisé en ce que** l'ensemble comprend un dispositif d'identification d'animal (26) pour identifier un animal et pour fournir un signal d'identification, l'élément d'entraînement (25) étant commandé à l'aide du signal d'identification.

10. Ensemble selon l'une quelconque des revendications 1 à 9, **caractérisé en ce que** les ouvertures d'entrée du dispositif de sélection sont disposées autour d'un axe central (11), **en ce que** chaque partie de support est fixée à un bras (12, 13 ; 14, 15) qui s'étend radialement vers l'extérieur à partir de l'axe central (11), et **en ce que** l'élément d'entraînement (25) est adapté pour provoquer le pivotement du bras autour de l'axe central (11) afin d'entraîner l'élément de fermeture (40, 41) qui est apte à être enroulé à coulisser à travers l'ouverture d'entrée.

11. Ensemble selon l'une quelconque des revendications 1 à 10, **caractérisé en ce que** le dispositif de sélection est muni d'un cadre (1, 2, 3, 4, 5) qui est disposé au sol, l'élément de fermeture qui est apte à être enroulé entourant le cadre au moins partiellement.

12. Dispositif de sélection conçu pour permettre à des animaux de passer d'une première zone à une seconde zone, ledit dispositif de sélection étant adapté pour être utilisé dans un ensemble selon l'une quelconque des revendications précédentes, le dispositif de sélection comprenant un certain nombre d'ouvertures d'entrée, le nombre d'ouvertures d'entrée correspondant au nombre d'ouvertures de sortie, et une ouverture de sortie étant associée à une ouverture d'entrée respective, **caractérisé en ce que** le dispositif de sélection est muni d'au moins un dispositif de fermeture (40, 41) qui peut coulisser au moyen d'un élément d'entraînement (25, 28, 32) afin de fermer une ouverture d'entrée, et **en ce que** le dispositif de fermeture est muni d'un élément de fermeture qui est apte à être enroulé, tel qu'une toile (40, 41) en tissu ou en plastique, avec deux parties de support allongées (20, 21 ; 22, 23), une extrémité du dispositif de fermeture qui est apte à être enroulée étant fixée à chaque partie de support (20, 21 ; 22, 23), l'élément d'entraînement (25) étant adapté pour déplacer les parties de support (20, 21 ; 22, 23) l'une par rapport à l'autre pour accroître ou réduire la distance entre les parties de support, et avec un mécanisme d'enroulement pour enrouler ou dérouler automatiquement l'élément de fermeture (40, 41).
